# EUROPÄISCHE PATENTSCHRIFT

(11) **EP 2 867 910 B1**
(45) Veröffentlichungstag und Bekanntmachung des Hinweises auf die Patenterteilung: **28.09.2016**
(21) Anmeldenummer: 13802626.5
(22) Anmeldetag: 10.12.2013
(51) Int. Cl.: H01H 9/54, H01H 37/54, H02H 5/04

(54) **TEMPERATURSCHUTZSCHALTUNG**
TEMPERATURE PROTECTION CIRCUIT
CIRCUIT PROTECTEUR THERMIQUE

(30) Priorität: 18.12.2012 DE 102012112487; 05.02.2013 DE 202013100509 U; 14.05.2013 DE 202013102091 U
(43) Veröffentlichungstag der Anmeldung: 06.05.2015
(73) Patentinhaber: Thermik Gerätebau GmbH, 99706 Sondershausen (DE)
(72) Erfinder: LIEHR, Hans-Christian, 06526 Sangerhausen (DE); HOFSAESS, Marcel P., 99706 Sondershausen (DE)
(74) Vertreter: Witte, Weller & Partner Patentanwälte mbB
(86) Internationale Anmeldenummer: PCT/EP2013/076026
(87) Internationale Veröffentlichungsnummer: WO 2014/095477

(56) Entgegenhaltungen:
- DE-A1- 2 253 975
- DE-A1-102007 042 903
- DE-C2- 19 827 113
- DE-U1-202013 100 509

## Beschreibung

Die vorliegende Erfindung betrifft eine Temperaturschutzschaltung mit zwei elektrischen Verbindungsanschlüssen für ein gegen Überhitzung zu schützendes elektrisches Gerät und zumindest einem temperaturabhängigen Schalter, wobei die Temperaturschutzschaltung zumindest einen elektronischen Halbleiterschalter umfasst, und der temperaturabhängige Schalter ein temperaturabhängiges Schaltwerk, zwei stationäre Kontakte, die mit den Verbindungsanschlüssen verbunden sind, sowie zwei elektrisch miteinander verbundene Gegenkontakte umfasst, die temperaturabhängig mit den beiden stationären Kontakten in Anlage sind und diese dann elektrisch leitend miteinander verbinden.

Eine derartige Temperaturschutzschaltung ist aus der DE 20 2013 100 509 U1 bekannt. Die bekannte Temperaturschutzschaltung setzt elektronische Halbleiterschalter für Wechselspannung ein, um bei temperaturabhängigen Schaltern mit Bimetall-Schaltwerk Lichtbögen zu löschen.

Ein in derartigen Temperaturschutzschaltungen verwendbarer temperaturabhängiger Schalter ist aus der DE 26 44 411 C2 bekannt.

Der bekannte Schalter weist ein Gehäuse mit einem becherartigen Unterteil auf, in das ein temperaturabhängiges Schaltwerk eingelegt ist. Das Unterteil wird durch ein Oberteil verschlossen, das durch den hochgezogenen Rand des Unterteils an diesem gehalten wird. Das Unterteil kann aus Metall oder Isolierstoff gefertigt sein, während das Oberteil aus Isolierstoff besteht.

In dem Oberteil sitzen zwei Kontaktnieten, deren innere Köpfe als stationäre Kontakte für das Schaltwerk dienen. Die Nietschäfte ragen durch Durchgangsöffnungen in dem Oberteil nach außen und gehen dort in äußere Köpfe über, die dem Außenanschluss des bekannten Schalters dienen. An diese äußeren Köpfe können unmittelbar Anschlusslitzen angelötet werden, wobei es auch bekannt ist, an den äußeren Köpfen Kontaktwinkel zu halten, an die Anschlusslitzen angelötet oder angecrimpt werden.

Das Schaltwerk trägt ein Stromübertragungsglied in Form einer Kontaktbrücke, auf deren Oberseite zwei über die Kontaktbrücke elektrisch miteinander verbundene Gegenkontakte vorhanden sind, die je nach Temperatur mit den beiden stationären Kontakten in Anlage gebracht werden und diese dann elektrisch miteinander verbinden.

Das temperaturabhängige Schaltwerk weist eine Bimetall-Schnappscheibe sowie eine Feder-Schnappscheibe auf, die zentrisch von einem Zapfen durchsetzt sind, der die Kontaktbrücke trägt. Die Feder-Schnappscheibe ist umfänglich in dem Gehäuse festgelegt, während sich die Bimetall-Schnappscheibe je nach Temperatur an einer Schulter des Unterteils oder an dem Rand der Feder-Schnappscheibe abstützt und dabei entweder die Anlage der Kontaktbrücke an den beiden stationären Kontakten ermöglicht oder aber die Kontaktbrücke von den stationären Kontakten abhebt, so dass die elektrische Verbindung zwischen den Außenanschlüssen unterbrochen wird.

Dieser temperaturabhängige Schalter wird in bekannter Weise dazu verwendet, elektrische Geräte vor Überhitzung zu schützen. Dazu wird der Schalter elektrisch mit dem zu schützenden Gerät und dessen Versorgungsspannung in Reihe geschaltet und mechanisch so an dem Gerät angeordnet, dass er mit diesem in thermischer Verbindung steht.

Unterhalb der Ansprechtemperatur der Bimetall-Schnappscheibe liegt die Kontaktbrücke an den beiden stationären Kontakten an, so dass der Stromkreis geschlossen ist und der Laststrom des zu schützenden Gerätes über den Schalter fließt. Erhöht sich die Temperatur über einen zulässigen Wert hinaus, so hebt die Bimetall-Schnappscheibe die Kontaktbrücke gegen die Stellkraft der Feder-Schnappscheibe von den stationären Kontakten ab, wodurch der Schalter geöffnet und der Laststrom des zu schützenden Gerätes unterbrochen wird.

Das jetzt stromlose Gerät kann sich dann wieder abkühlen. Dabei kühlt sich auch der thermisch an das Gerät angekoppelte Schalter wieder ab, der daraufhin selbsttätig wieder schließt.

Durch die Dimensionierung der Kontaktbrücke ist der bekannte Schalter in der Lage, verglichen mit anderen temperaturabhängigen Schaltern, bei denen der Laststrom des zu schützenden Gerätes unmittelbar über die Bimetall-Schnappscheibe oder eine ihr zugeordnete Feder-Schnappscheibe fließt, sehr viel höhere Betriebsströme zu führen, so dass er zum Schützen größerer elektrischer Geräte mit hoher Leistungsaufnahme eingesetzt werden kann.

Wie bereits erwähnt, schaltet sich der bekannte Schalter nach dem Abkühlen des von ihm geschützten Gerätes selbsttätig wieder ein. Während ein derartiges Schaltverhalten zum Schutz z.B. eines Haartrockners durchaus sinnvoll sein kann, ist dies überall dort nicht erwünscht, wo sich das zu schützende Gerät nach dem Abschalten nicht automatisch wieder einschalten darf, um Beschädigungen zu vermeiden. Dies gilt z.B. für Elektromotoren, die als Antriebsaggregate eingesetzt werden.

Die DE 198 27 113 C2 schlägt daher vor, einen sogenannten Selbsthaltewiderstand vorzusehen, der elektrisch parallel zu den Außenanschlüssen liegt. Der Selbsthaltewiderstand liegt bei geöffnetem Schalter elektrisch in Reihe zu dem zu schützenden Gerät, durch das wegen des Widerstandswertes des Selbsthaltewiderstandes jetzt nur ein unschädlicher Reststrom fließt. Dieser Reststrom reicht jedoch aus, den Selbsthaltewiderstand soweit aufzuheizen, dass er eine Wärme abstrahlt, die die Bimetall-Schnappscheibe oberhalb ihrer Schalttemperatur hält.

Der aus der DE 198 27 113 C2 bekannte Schalter kann auch mit einer stromabhängigen Schaltfunktion ausgestattet sein, wozu ein Heizwiderstand vorgesehen ist, der permanent in Reihe zu den Außenanschlüssen geschaltet ist. Der Laststrom des zu schützenden Gerätes fließt somit ständig durch diesen Heizwiderstand, der so dimensioniert werden kann, dass er bei Überschreiten einer bestimmten Laststromstärke dafür sorgt, dass die Bimetall-Schnappscheibe auf eine Temperatur oberhalb ihrer Ansprechtemperatur aufgeheizt wird, so dass der Schalter bei einem erhöhten Laststrom bereits öffnet, bevor das zu schützende Gerät sich unzulässig erwärmt hat.

Derartige Schalter haben sich im Alltagseinsatz bewährt. Sie werden insbesondere für die Absicherung von elektrischen Geräten mit hoher Leistungsaufnahme eingesetzt, weil sie über die Kontaktbrücke hohe Ströme führen können. Wenn derartige Schalter mit Versorgungswechselspannungen betrieben werden und nicht im Nulldurchgang der Versorgungswechselspannung öffnen, bilden sich beim Abheben der Kontaktbrücke von den stationären Kontakten Lichtbögen zwischen den stationären Kontakten und den Gegenkontakten aus und der Spannungsabfall über dem Schalter sinkt auf die Brennspannung der Lichtbögen ab. Auf diesem Niveau verbleibt der Spannungsabfall bis die angelegte Versorgungswechselspannung die Polarität wechselt, also ihren nächsten Nulldurchgang erreicht. Dann werden die Lichtbögen gelöscht und der Schalter ist zuverlässig geöffnet.

In den üblichen Anwendungsfällen des bekannten Schalters mit hoher Abschaltleistung muss ein Laststrom hoher Stromstärke unterbrochen werden, was dazu führt, dass sich starke Lichtbögen ausbilden, was wiederum zu Kontaktabbrand und damit einhergehend langfristig zu einer Veränderung der Geometrie der Schaltflächen und oft auch zu einer Verschlechterung des Schaltverhaltens führt.

Beim unkontrollierten Überspringen im Inneren des Schalters können Lichtbögen sogar Schäden an der Bimetall-Schnappscheibe hervorrufen. Lichtbögen können ferner dazu führen, dass die Schaltflächen an den stationären Kontakten und den Gegenkontakten sozusagen zusammenkleben und sich die Kontaktbrücke nicht oder nicht mehr schnell genug von den stationären Kontakten ablöst.

Diese Probleme erhöhen sich mit der Anzahl der Schaltzyklen sogar noch, so dass sich das Schaltverhalten des bekannten Schalters im Laufe der Zeit verschlechtert. Vor diesem Hintergrund ist die Lebensdauer, also die Zahl der zulässigen Schaltzyklen der bekannten Schalter begrenzt, wobei die Lebensdauer auch von der Abschaltleistung, also der Stromstärke der geschalteten Ströme abhängt.

Gattungsgemäße Schalter der Anmelderin haben z.B. bei einer Versorgungswechselspannung von 250 Volt eine übliche Lebensdauer von 10.000 Schaltzyklen bei einem Laststrom von 10 Ampere, und 2.000 Schaltzyklen bei einem Laststrom von 25 Ampere.

Wenn die bekannten Schalter dagegen mit einer Versorgungsgleichspannung betrieben werden, erlöschen sich ausbildende Lichtbögen in der Regel nicht, weil die anliegende Versorgungsgleichspannung nämlich keine Nulldurchgänge aufweist, die bei einer Versorgungswechselspannung zu einem Erlöschen von Lichtbögen führen.

Ein Erlöschen der Lichtbögen findet immer dann nicht statt, wenn die über dem geöffneten Schalter anliegende Gleichspannung so hoch ist, dass sie im Bereich der minimalen Lichtborgenbrennspannung liegt, die vor allem durch die Konstruktion der Schalter bedingt ist.

Bei in Gleichspannungskreisen eingesetzten temperaturabhängigen Schaltern muss daher sichergestellt werden, dass sich Lichtbögen erst gar nicht ausbilden können.

Wenn die bekannten Schalter in Gleichspannungskreisen eingesetzt werden, wird folglich darauf geachtet, dass die über dem geöffneten Schalter abfallende Gleichspannung unterhalb der konstruktionsbedingten minimalen Lichtbogenbrennspannung liegt. Dies erfordert in bestimmten Anwendungsfällen den Einsatz von temperaturabhängigen Schaltern, die im geöffneten Zustand einen entsprechend großen Abstand zwischen der Kontaktbrücke und den stationären Kontakten sicherstellen, und damit große Abmaße aufweisen.

Ferner muss für ein schnelles Schaltverhalten gesorgt werden, also ein schnelles Überführen der Kontaktbrücke von ihrer Schließstellung in ihre Öffnungsstellung, in der sie ihren maximalen Abstand zu den stationären Kontakten einnimmt. Auch hierdurch kann die minimale Lichtbogenbrennspannung erhöht werden. Allerdings erfordert dieses schnelle Schalten entsprechend ausgelegte Feder- und/oder Biemtall-Schnappscheiben, was ebenfalls kostenintensiv ist und zu größeren Abmaßen führt.

Große Abmaße sind jedoch häufig unerwünscht, weil sie die Konstruktion der Schalter aufwändig und kostenintensiv machen und einen unerwünscht großen Einbauraum erfordern.

Bekannte temperaturabhängige Schalter mit wünschenswert kleinen Abmaßen haben andererseits nur eine geringe maximale zulässige Schaltgleichspannung, die durch ihre konstruktionsbedingte minimale Lichtbogenbrennspannung bestimmt wird.

Im Zusammenhang mit Relais und Schützen ist es bekannt, dass Lichtbögen durch elektromagnetische Wechselfelder beeinflusst und durch kapazitive sowie induktive Bauteile im Wechselstromkreis gelöscht werden können. Darüber hinaus ist es bekannt, in Schützen durch die sogenannte permanentmagnetische Blasung einen entstehenden Lichtbogen so zu führen, dass er schnell erlischt.

Aus der DE 31 32 338 A1 ist es zudem bekannt, zu einem Schütz mit zwei Festkontakten und einer linear beweglichen Kontaktbücke ein steuerbares Halbleiterventil für Wechselspannung, beispielsweise einen Triac, parallel zu schalten, indem seine Stromanschlüsse mit den Festkontakten verbunden werden. Der Steuereingang des Triac wird über einen Längswiderstand und eine flexible Leitung, die in das Innere des Schützes führt, mit einem Anschluss an der Kontaktbrücke verbunden, der zwischen den Kontaktstellen zu den Festkontakten liegt.

Bei geschlossenem Schütz muss der Spannungsabfall über den Kontaktstellen so gering sein, dass sich für den Triac kein wirksamer Steuerstrom zwischen dem Steueranschluss und dessen Bezugsanschluss, der einem der beiden Stromanschlüsse entspricht, ausbildet. Der Triac ist dann offen, bleibt also stromlos.

Öffnet das Schütz infolge externer Ansteuerung, so entstehen zwei Lichtbögen, die für eine hinreichende Zeitspanne zu einer so großen Brennspannung führen müssen, dass die Kontaktbrücke zu dem Bezugsanschluss so lange eine hinreichende Potentialdifferenz aufweist, bis ein Steuerstrom durch den Längswiderstand fließt, der den Triac zünden kann. Hat der Triac gezündet, also geöffnet, so übernimmt er den durch den Schütz fließenden Laststrom, woraufhin die Lichtbögen erlöschen.

Durch die schnelle elektromagnetische Betätigung der Kontaktbrücke bewegt sie sich so schnell hinreichend weit von den Festkontakten weg, dass keine erneute Zündung des Triacs erfolgen kann, nachdem im Nulldurchgang der Versorgungswechselspannung der Laststrom unterbrochen wurde.

Dieses Verfahren hat also drei kritische Bedingungen. Der Spannungsabfall über den Kontaktstellen darf bei geschlossenem Schalter nicht zu groß und bei geöffnetem Schalter für eine bestimmte Zeitdauer nicht zu gering sein. Ferner muss die Abschaltgeschwindigkeit so groß sein, dass der Triac nicht erneut gezündet wird. Zudem ist konstruktiv zumindest problematisch, dass eine flexible Leitung in das Innere des Schützes geführt werden muss.

Aus der DE 2 253 975 A ist eine Schaltung bekannt, in der ein Lichtbogen, der sich beim Öffnen oder Schliessen eines temperaturabhängigen Schalters in einem Wechselspannungskreis ausbildet, durch einen parallel zu dem Schalter angeordneten Triac gelöscht wird. Der hier eingesetzte temperaturabhängige Schalter ist ein Umschalter mit einem zentralen Anschluss, der temperaturabhängig mit einem Hauptkontakt, der in dem Laststromkreis des zu schützenden Gerätes angeordnet ist, oder einem Hilfskontakt verbunden wird, der mit dem Steuereingang des Triac verbunden ist. Bei geschlossenem Hilfskontakt fließt dauerhaft ein Reststrom, der zu Verlustleistung führt

Aus der JP H01 303 018 A, der GB 2 458 650 A und der DE 2 032 633 A ist jeweils eine Schaltung bekannt, in der in einem Wechselspannungskreis ein den Betriebsstrom eines Gerätes führender Triac über einen temperaturabhängigen Schalter gezündet oder gelöscht wird.

In der DE 20 2013 100 509 U1 der vorliegenden Anmelderin ist beschreiben, dass das in der oben erwähnten DE 31 32 338 A1 beschriebene Prinzip der Lichtbogenlöschung für Versorgungswechselspannungen überraschender Weise auch bei bestehenden temperaturabhängigen Schaltern einsetzbar ist. Wenn nämlich der Steuereingang des Halbleiterventils vorzugsweise über das Unterteil mit dem Schaltwerk des Schalters und über das Schaltwerk mit den Gegenkontakten auf dem Stromübertragungsglied verbunden wird, ist er bei dem aus der DE 26 44 411 C2 bekannten Schalter über die Feder-Schnappscheibe und/oder die Bimetall-Schnappscheibe elektrisch mit der Kontaktbrücke und über diese mit den Gegenkontakten verbunden. Weil hier die Kontaktbrücke selbst elektrisch leitend ist, ist der Steuereingang mit den beiden auf ihr vorgesehenen Gegenkontakten verbunden und liegt somit auf dem elektrischen Potential der beiden Gegenkontakte.

Die Kontaktbrücke muss jedoch selbst nicht elektrisch leitfähig sein, es reicht aus, wenn die auf ihr vorgesehenen Gegenkontakte elektrisch miteinander und mit dem Schaltwerk verbunden sind, so dass das Schaltwerk auf dem Potential der Gegenkontakte liegt.

Bei geschlossenem temperaturabhängigem Schalter entspricht dieses Potential dem Potential der Versorgungswechselspannung an dem Bezugs-Stromanschluss des Halbleiterventils, so dass kein Steuerstrom für das Halbleiterventil erzeugt wird. Öffnet der temperaturabhängige Schalter, so beginnen sich beim Abheben der Kontaktbrücke von den stationären Kontakten Lichtbögen auszubilden, die schnell eine Lichtbogenspannung von 10 Volt erreichen. Dadurch wird ein hinreichend hoher und lang andauernder Steuerstrom für das Halbleiterventil erzeugt, der zum Zünden des Halbleiterventils führt, das somit öffnet.

Sobald das Halbleiterventil zündet, übernimmt es den Laststrom und der temperaturabhängige Schalter wird stromlos, so dass die Lichtbögen erlöschen. Das Halbleiterventil schließt wieder, wenn die Betriebswechselspannung den Nulldurchgang erreicht. Während dieser Zeitpanne hat sich die Kontaktbrücke so weit von den stationären Kontakten entfernt, dass es nicht zu einem Überschlagen und erneutem Ausbilden von Lichtbögen kommt.

Die Idee in der DE 20 2013100 509 U1 besteht also darin, die Entstehung von Lichtbögen nach wie vor in Kauf zu nehmen, und diese über das Wechselstromschaltverhalten eines TRIAC schon wieder zu löschen, bevor die Versorgungswechselspannung ihren nächsten Nulldurchgang erreicht, in dem der Lichtbogen sowieso gelöscht würde. Dadurch werden die Lebensdauer und/oder die Abschaltleistung des temperaturabhängigen Schalters erhöht.

Die DE 10 2007 042 903 A1 beschreibt eine elektrische Schaltung mit zwei in Reihe geschalteten, mechanisch miteinander gekoppelten Schaltern zum Schalten von Strömen bei Gleichspannung. Durch einen Bypass, der mit Hilfe eines Transistors schaltbar ist, wird verhindert, dass sich beim Öffnen der Schalter Lichtbögen bilden.

Ausgehend von diesem Stand der Technik ist es daher Aufgabe der vorliegenden Erfindung, bei der eingangs genannten Temperaturschutzschaltung die maximal zulässige Schaltgleichspannung des temperaturabhängigen Schalters auf konstruktiv einfache und kostengünstige Weise zu erhöhen.

Erfindungsgemäß wird diese Aufgabe bei der eingangs genannten Temperaturschutzschaltung dadurch gelöst, dass zwei elektronische Halbleiterschalter für Gleichspannung vorgesehen sind, die jeweils einen Steuereingang umfassen, wobei die Steuereingänge zumindest bei geschlossenem temperaturabhängigem Schalter über das Schaltwerk elektrisch mit den Gegenkontakten verbunden sind, wobei jeder Halbleiterschalter einen ersten und einen zweiten Stromanschluss aufweist, der erste Stromanschluss des einen Halbleiterschalters mit dem ersten Stromanschluss des anderen Halbleiterschalters verbunden ist, und der zweite Stromanschluss des einen sowie der zweite Stromanschluss des anderen Halbleiterschalters mit einem der Verbindungsanschlüsse verbunden ist.

Die beiden Halbleiterschalter sind auf diese Weise anti in Reihe geschaltet, so dass der eine Halbleiterschalter für die Lichtbogenlöschung in einer Polung der Versorgungsgleichspannung und der andere Halbleiterschalter für die Lichtbogenlöschung in der anderen Polung der Versorgungsgleichspannung sorgt.

Auf diese Weise ist die Temperaturschutzschaltung unipolar ausgelegt, so dass bei Abschaltung einer Versorgungsgleichspannung unabhängig von ihrer Polarität die entstehenden Lichtbögen zuverlässig gelöscht werden

Die Erfinder der vorliegenden Anmeldung haben nun erkannt, dass durch externe Verschaltung mit einem elektronischen Halbleiterschalter die maximal zulässige Schaltgleichspannung eines bestehenden temperaturabhängigen Schalters erhöht werden kann, ohne dass konstruktive Änderungen an dem Schalter selbst erforderlich sind.

Gemäß der vorliegenden Anmeldung wird bei einem temperaturabhängigen Schalter, der in einem Gleichspannungskreis eingesetzt wird, entgegen der Lehre aus dem Stand der Technik durch höhere Schaltgleichspannungen die Bildung von Lichtbögen in Kauf genommen, die entstehenden Lichtbögen werden jedoch mit Hilfe eines elektronischen Halbleiterschalters wieder gelöscht.

Dabei ist konstruktiv von Vorteil, dass kein bewegliches Kabel in das Innere des Schalters zu dem Stromüberragungsglied geführt werden muss, sondern dass unerwartet das temperaturabhängige Schaltwerk die elektrische Verbindung zwischen dem Steuereingang des Halbleiterschalters und den Gegenkontakten auf dem Stromübertragungsglied herstellen kann.

Durch die Verwendung eines elektronischen Halbleiterschalters werden überraschender Weise die infolge einer hohen Schaltgleichspannung entstehenden Lichtbögen so schnell gelöscht, dass sie keine Schäden im Inneren des Schalter hervorrufen, und die Lebensdauer des Schalters nicht verringert wird.

Beim Öffnen des Schalters fällt zunächst eine so hohe Gleichspannung über dem Schalter ab, dass sich zwischen der Kontaktbrücke und den stationären Kontakten Lichtbögen ausbilden. Diese Lichtbögen schalten den Halbleiterschalter durch, so dass der temperaturabhängige Schalter kurzgeschlossen und damit stromlos wird. Dadurch erlöschen die Lichtbögen.

Auf diese Weise können mit bestehenden Schaltern auch Gleichspannungen weit oberhalb der Lichtbogenbrennspannung sicher abgeschaltet werden.

Damit lassen sich bestehende temperaturabhängige Schalter der eingangs beschriebenen Art ohne konstruktive Änderungen für höhere Abschaltleistungen einsetzen, als in einer Temperaturschutzschaltung ohne lichtbogenlöschenden Halbleiterschalter.

Diese bestehenden Schalter weisen in einer Ausgestaltung eine Feder-Schnappscheibe auf, die aus Bimetall gefertigt sein kann und das Stromübertragungsglied trägt sowie permanent mechanisch und elektrisch mit dem Unterteil verbunden ist. Hier ist das elektrisch leitende Stromübertragungsglied also permanent mit dem Steuereingang des Halbleiterschalter verbunden.

Es sind aber auch Konstruktionen mit Bimetall- und Feder-Schnappscheibe bekannt, bei denen die Feder-Schnappscheibe zumindest nach dem vollständigen Öffnen des Schalters nicht mehr elektrisch mit dem Unterteil in Verbindung steht, weil sie von ihrer konvexen in ihre konkave Form umspringt. Zu Beginn des Öffnungsvorganges drückt die Feder-Schnappscheibe sich jedoch mit ihrem Rand noch innen an dem Unterteil ab, während die Bimetall-Schnappscheibe bereits beginnt, gegen die Kraft der Feder-Schnappscheibe, die dabei allmählich flachgedrückt wird, das Stromübertragungsglied von den stationären Kontakten abzuheben, so dass sich die Lichtbögen ausbilden.

Erst dann, wenn die Bimetall-Schnappscheibe die Feder-Schnappscheibe hinreichend weit flachgedrückt hat, springt die Feder-Schnappscheibe um. Bis zu diesem Zeitpunkt ist sie jedoch elektrisch mit dem Unterteil verbunden, so dass der Steuerstrom zu dem Steuereingang gelangen kann. Überraschender Weise reicht der Zeitraum bis zu diesem Zeitpunkt aus, um den Halbleiterschalter sicher zu schließen und den Lichtbogen zu löschen.

Für die Verwendung des Halbleiterschalters zum Löschen von Lichtbögen, die in Gleichspanungskreisen in temperaturabhängigen Schaltern entstehen, ist es daher nicht erforderlich, dass der Steuereingang permanent elektrisch mit dem Schaltwerk verbunden ist. Wichtig ist nur, dass diese Verbindung zumindest bei geschlossenem Schalter und danach so lange besteht, bis der Halbleiterschalter schließt und die Lichtbögen löscht.

Die Erfinder der vorliegenden Anmelddung haben erstmals erkannt, dass bestimmte bestehende temperaturabhängige Schalter eine elektrische Verbindung zwischen den Gegenkontakten auf dem Stromübertragungsglied und dem Unterteil bereitstellen, die zu Beginn eines Öffnungsvorganges zumindest solange erhalten bleibt, dass durch sich ausbildende Lichtbögen ein Halbleiterschalter geschlossen werden kann.

Die vorliegende Erfindung betrifft auch ein elektrisches Gerät, das mit der neuen Temperaturschutzschaltung versehen ist.

Die vorliegende Erfindung ermöglicht es nun auch erstmals, einfach aufgebaute und damit preiswerte temperaturabhängige Schalter für Abschaltleistungen einzusetzen, für die sie ohne die zusätzlichen Halbleiterschalter nicht ausgelegt sind.

Damit können jetzt auch erstmals zuverlässig temperaturabhängige Schalter für hohe Schaltgleichspannungen eingesetzt werden, die als Stromübertragungsglied keinen Kontaktteller sondern ein Federteil aufweisen, das die beiden Gegenkontakt trägt oder an dem die beiden Gegenkontakte ausgebildet sind. Das Federteil kann ein Bimetallteil, insbesondere eine Bimetall-Schnappscheibe sein, die nicht nur für die temperaturabhängige Schaltfunktion sorgt, sondern gleichzeitig auch noch den Strom führt, wenn der Schalter geschlossen ist.

Weil erfindungsgemäß die beim Öffnen des Schalters an den beiden Gegenkontakten entstehenden Lichtbögen durch die Halbleiterschalter sehr schnell wieder gelöscht werden, wird die Bimetallscheibe beim Öffnen des Schalters nicht oder nur so geringfügig geschädigt, dass verglichen mit einem Betrieb ohne Halbleiterschalter die Lebensdauer und vor allem die zulässige Schaltleistung dieser sehr einfach aufgebauten temperaturabhängigen Schalter deutlich erhöht werden.

Die Erfinder sind also nicht den im Stand der Technik bisher beschrittenen Weg gegangen, nämlich die Konstruktion der bekannten Schalter im Hinblick auf höhere minimale Lichtbogenbrennspannung weiter zu optimieren, sondern haben den auf den ersten Blick ungewöhnlichen und auch nicht erfolgversprechenden Weg gewählt, zusätzlich zwei Halbleiterschalter einzusetzen, obwohl dies zudem noch zu zusätzlichen Kosten führt.

Die zusätzlichen Kosten werden jedoch nach Erkenntnis der Erfinder dadurch mehr als aufgefangen, dass nicht nur bestehende Schalter wider Erwarten jetzt für höhere Abschaltleistungen eingesetzt werden können, sondern dass auch die Lebensdauer bestehender temperaturabhängiger Schalter erhöht wird..

Die Erfinder haben also eine Schaltung geschaffen, die für temperaturabhängige Schalter mit Bimetall-Schaltwerk eine elektronische Lichtbogenlöschung in Gleichspannungskreisen bewirkt. Die Temperaturschutzschaltung ist dabei unipolar ausgelegt, so dass bei Abschaltung einer Versorgungsgleichspannung unabhängig von ihrer Polarität die entstehenden Lichtbögen zuverlässig gelöscht werden.

Die der Erfindung zugrundeliegende Aufgabe wird auf diese Weise vollkommen gelöst.

Unter einem "elektronischen Halbleiterschalter für Gleichspannung" wird im Rahmen der vorliegenden Erfindung ein Halbleiterbauteil verstanden, dass ohne Ansteuersignal an seinem Steuereingang eine an seine Stromanschlüsse angelegte Gleichspannung sperrt und bei Anliegen einer Steuerspannung durchschaltet, also leitend wird.

Eine erfindungsgemäße Temperaturschutzschaltung wird in den Versorgungsgleichstromkreis eines vor Überhitzung zu schützenden elektrischen Gerätes geschaltet, wobei zwischen den beiden Verbindungsanschlüssen die Halbleiterschalter sowie zumindest ein temperaturabhängiger Schalter verschaltet sind.

Ein Ausführungsbeispiel für die erfindungsgemäß eingesetzten Halbleiterschalter sind Transistoren, die insbesondere ausgewählt sind aus der Gruppe, die bipolare Transistoren, Feldeffekttransistoren (FET), Metall-Oxid-Halbleiter-Feldeffekttransistoren (MOS-FET), insbesondere vom selbstsperrenden Typ, umfasst.

Dabei ist es bevorzugt, wenn das temperaturabhängige Schaltwerk ein Federteil umfasst, das das Stromübertragungsglied trägt und mit diesem elektrisch leitend verbunden ist sowie zumindest bei geschlossenem temperaturabhängigem Schalter elektrisch mit dem Steuereingang verbunden ist.

Vorzugsweise weist der Schalter ein das Schaltwerk aufnehmendes Gehäuse auf, das ein Unterteil sowie ein Oberteil aufweist, an dessen Innenseite die stationären Kontakte angeordnet sind.

Das Federteil kann ein länglicher Bimetallarm oder ein Federarm sein, der an seinem freien Ende das Stromübertragungsglied trägt und an seinem anderen Ende an dem Gehäuse festgelegt ist und dort mit einem Anschluss für den Steuereingang augebildet ist. Wenn das Federteil ein Federarm ist, ist ihm ein Bimetallteil zugeordnet, das das freie Ende des Federarms temperaturabhängig von den stationären Kontakten wegbewegt, so dass der Schalter öffnet. Bei diesen Ausführungen ist der Steuereingang permanent mit dem temperaturabhängigen Schaltwerk verbunden.

Das Federteil ist jedoch bevorzugt eine Bimetall-Schnappscheibe, die zentrisch das Stromübertragungsglied trägt und sich zumindest bei geschlossenem temperaturabhängigem Schalter an dem Unterteil abstützt.

Alternativ ist das Federteil eine Feder-Schnappscheibe, die sich zumindest bei geschlossenem temperaturabhängigem Schalter an dem Unterteil abstützt, wobei eine Bimetall-Schnappscheibe vorgesehen ist, die das Stromübertragungsglied oberhalb ihrer Schalttemperatur von den stationären Kontakten abhebt.

Diese Maßnahmen sind konstruktiv von Vorteil, denn sie setzen als temperaturabhängigen Schalter einen bestehenden Schalter ein.

Während es durchaus genügt, wenn lediglich eine Bimetall-Schnappscheibe vorgesehen ist, die sowohl den Kontaktdruck herstellt als auch für das temperaturabhängige Öffnen sorgt, kann durch eine Feder-Schnappscheibe, die zusätzlich zur Bimetall-Schnappscheibe oder allein den Kontaktdruck bewirkt, die Bimetall-Schnappscheibe in ihrer Tieftemperaturstellung mechanisch entlastet werden, was zu einer größeren Langzeitstabilität ihres Schaltverhaltens beiträgt.

Der zum Durchschalten des Halbleiterschalters erforderliche, geringe Strom kann aufgrund erster Dauerversuche in den Betriebsräumen der Anmelderin sowohl durch die Feder-Schnappscheibe als auch durch die Bimetall-Schnappscheibe geleitet werden.

Das Unterteil kann aus elektrisch leitendem Material oder aus Isoliermaterial gefertigt sein. Wenn das Unterteil aus Isoliermaterial gefertigt ist, weist es an seinem Boden eine Elektrode auf, auf der sich die Bimetall- und/oder Feder-Schnappscheibe abstützt und die aus dem Unterteil herausführt und dort mit dem Steuereingang verbunden ist.

Wenn das Unterteil dagegen selbst elektrisch leitend ist, muss der Steuereingang lediglich mit außen mit dem Unterteil verbunden werden, was konstruktiv von Vorteil ist.

Wenn das Federteil permanent elektrisch mit dem Unterteil verbunden ist, ist auf konstruktiv einfache und preiswerte Weise sichergestellt, dass bei einem Öffnungsvorgang entstehende Lichtbögen zu einem Steuerstrom zu dem Steuereingang führen.

Weiter ist es bevorzugt, wenn zwischen den stationären Kontakten ein Selbsthaltewiderstand angeschlossen ist, wobei vorzugsweise zwischen einen der stationären Kontakte und den zugeordneten Verbindungsanschluss ein Heizwiderstand geschaltet ist.

Hier ist von Vorteil, dass selbsthaltende Schalter und/oder Schalter mit definierter Stromabhängigkeit eingesetzt werden können. Die Erfinder der vorliegenden Anmeldung haben nämlich anhand von Versuchen erkannt, dass wider Erwarten ein Selbsthaltewiderstand und/oder ein Heizwiderstand die erfindungsgemäße Verwendung des Halbleiterschalters nicht beeinträchtigen.

Weiter ist es bevorzugt, wenn das Stromübertragungsglied ein elektrisch leitender Kontaktteller ist, auf dem die beiden Gegenkontakte angeordnet sind, die über den Kontaktteller elektrisch miteinander verbunden sind, wobei der Kontaktteller elektrisch leitend mit dem Schaltwerk verbunden ist.

Diese Maßnahme ist ebenfalls konstruktiv von Vorteil. Der Kontaktteller kann auf seiner Oberseite die Gegenkontakte aufweisen, durch zwei beschichtete Kontaktflächen auf der Oberseite ausgebildet sein können. Die Oberseite des Kontakttellers kann auch selbst die Gegenkontakte bilden, oder durchgehend als Kontaktfläche ausgebildet sein, wie dies in der DE 10 2011 016 142 A1 beschrieben ist.

Der Kontaktteller kann als kreisrunde Kontaktscheibe oder als längliche Kontaktbrücke ausgebildet sein.

Wie bereits erwähnt, kann das Stromübertragungsglied auch ein Federteil, insbesondere eine Bimetall-Schnappscheibe sein, an dem bzw. der die Gegenkontakte vorgesehen oder ausgebildet sind, die über das Federteil elektrisch leitend miteinander verbunden sind,

Das Federteil ist dabei vorzugsweise permanent mit dem Steuereingang des Halbleiterschalters verbunden. Dies kann über das elektrisch leitende Unterteil des temperaturabhängigen Schalters oder über eine zusätzliche Tragelektrode erfolgen, die die Bimetall-Schnappscheibe an deren Zentrum trägt und aus dem Gehäuse des temperaturabhängigen Schalters herausragt, wo sie mit dem Steuereingang verbunden ist.

Statt eines temperaturabhängigen Schalters mit zwei stationären Kontakten, der als zweipoliger Öffner ausgebildet ist, können in der Temperaturschutzschaltung auch zwei einpolige temperaturabhängige Schalter verwendet werden, die jeweils zwei Außenanschlüsse aufweisen. Diese Schalter werden über je einen Außenanschluss elektrisch in Reihe geschaltet, so dass je ein weiterer Außenanschluss eines Schalters als Verbindungsanschluss der Temperaturschutzschaltung dient. Diese Anordnung wird auch als Zwilling bezeichnet. In dieser Zwillingschaltung können alle gängigen temperaturabhängigen Schalter verwendet werden, die einpolige Öffner sind.

Erfindungsgemäß werden die Stromanschlüsse der Halbleiterschalter mit den beiden Verbindungsanschlüssen und der Steuereingang mit den miteinander verbundenen Außenanschlüssen verbunden, um für eine elektronische Lichtbogenlöschung zu sorgen.

Wenn die beiden temperaturabhängigen Schalter öffnen, führt die Lichtbogenspannung der sich ausbildenden Lichtbögen zum Schließen eines der Halbleiteschalter, wodurch die Lichtbögen erlöschen.

Die vorliegende Anmeldung basiert also auf der Verwendung eines elektronischen Halbleiterschalters in einer Temperaturschutzschaltung mit zwei elektrischen Verbindungsanschlüssen für ein zu schützendes Gerät und mit zumindest einem temperaturabhängigen Schalter, um beim Öffnen des Schalters entstehende Lichtbögen elektronisch zu löschen.

Die damit verbundenen Vorteile bestehen neben der höheren Abschaltleistung und längeren Lebensdauer der eingesetzten temperaturabhängigen Schalter auch darin, dass der Halbleiterschalter nur bei entstehendem Lichtbogen kurzzeitig den Laststrom führt, so dass es nicht zu einer übermäßigen Erwärmung des Halbleiterschalters kommt. Eine Kühlung für den Halbleiterschalter ist nicht erforderlich.

Während des "normalen" Dauerbetriebes wird der Laststrom durch den temperaturabhängigen Schalter geführt, der ebenfalls keine Kühlung benötigt.

Die Erfindung schafft damit allgemein eine Temperaturschutzschaltung für ein gegen Überhitzung zu schützendes elektrisches Gerät, mit zwei Verbindungsanschlüssen für das Gerät und zumindest einem temperaturabhängigen Schalter und einem elektronischen Halbleiterschalter.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der beigefügten Zeichnung dargestellt und werden in der nachfolgenden Beschreibung näher erläutert. Es zeigen:
- Fig. 1: in einer schematischen Darstellung ein erstes Ausführungsbeispiel für eine Temperaurschutzschaltung, in der der Schalter aus Fig. 2 verwendet wird;
- Fig. 2: einen schematischen, nicht maßstabsgetreuen Längsschnitt durch ein erstes Ausführungsbeispiel eines temperaturabhängigen Schalters, wie er in der Temperaturschutzschaltung aus Fig. 1 eingesetzt werden kann;
- Fig. 3: ein zweites Ausführungsbeispiel der Temperaturschutzschaltung aus Fig. 1, in der zwei einpolige temperaturanhängige Schalter eingesetzt werden, von denen einer in Fig. 4 gezeigt ist;
- Fig. 4: einen einpoligen temperaturabhängigen Schalter, wie er in der Temperaturschutzschaltung aus Fig. 3 verwendet wird;
- Fig. 5: ein nicht zur Erfindung gehörendes Beispiel für die Verschaltung des Halbleiterschalters aus Fig. 1 oder Fig. 3;
- Fig. 6: ein erfindungsgemäßes Beispiel für die Verschaltung zweier Halbleiterschalter in der Temperaturschutzschaltung aus Fig. 1 oder Fig. 3; und
- Fig. 7: einen schematischen, nicht maßstabsgetreuen Längsschnitt durch ein zweites Ausführungsbeispiel eines temperaturabhängigen Schalters, wie er in der Temperaturschutzschaltung aus Fig. 1 eingesetzt werden kann.

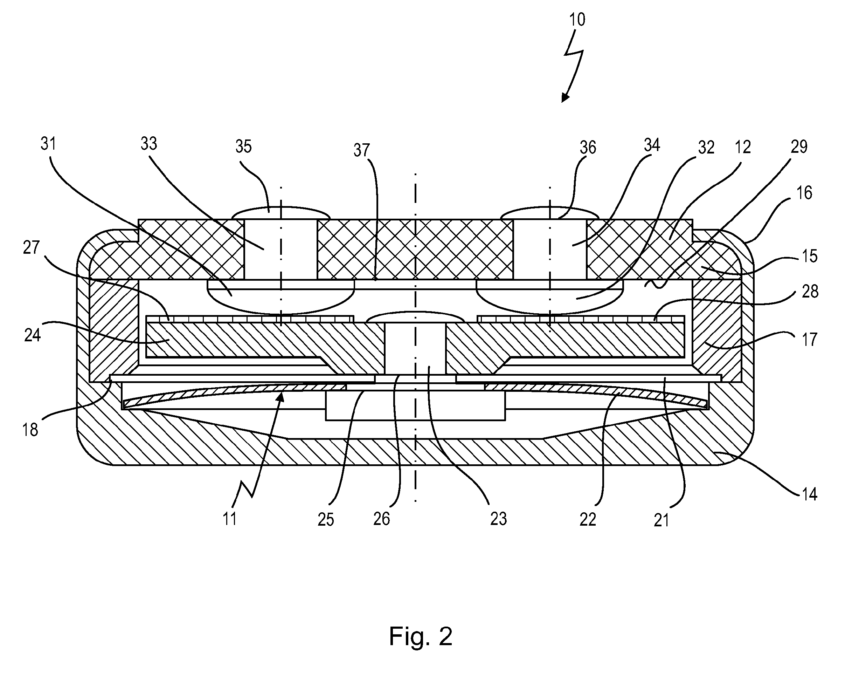

In Fig. 2 ist mit 10 ein temperaturabhängiger Schalter bezeichnet, der ein temperaturabhängiges Schaltwerk 11 umfasst, das in einem Gehäuse 12 untergebracht ist.

Das Gehäuse 12 umfasst ein aus elektrisch leitfähigem Material bestehendes Unterteil 14 sowie ein dieses verschließendes Oberteil 15 aus Isoliermaterial, das durch einen umgebördelten Rand 16 des Unterteils 14 an diesem gehalten wird. Zwischen dem Unterteil 14 und dem Oberteil 15 ist ein Ring 17 angeordnet, der sich auf einem Absatz 18 des Unterteils 14 abstützt und dort eine Feder-Schnappscheibe 21 des Schaltwerkes 11 an ihrem Rand einklemmt die somit permanent elektrisch leitend mit dem Unterteil 14 verbunden ist.

Das Schaltwerk 11 umfasst zusätzlich zu der Feder-Schnappscheibe 21 noch eine Bimetall-Schnappscheibe 22, die zusammen mit der Feder-Schnappscheibe 21 zentrisch von einem zapfenartigen Niet 23 durchgriffen wird, durch den diese mit einem Stromübertragungsglied in Form eines aus elektrisch leitfähigem Material gefertigten Kontakttellers 24 mechanisch und elektrisch verbunden sind. Der Niet 23 weist einen ersten Absatz 25 auf, auf dem die Bimetall-Schnappscheibe 22 mit radialem und axialem Spiel sitzt, wobei ein zweiter Absatz 26 vorgesehen ist, auf dem die Feder-Schnappscheibe 21 ebenfalls mit radialem und axialem Spiel sitzt.

Die Bimetall-Schnappscheibe 22 stützt sich mit ihrem umlaufenden Rand innen in dem Unterteil 14 ab.

Der Kontaktteller 24 weist in Richtung des Oberteils 15 zwei über den Kontaktteller 24 elektrisch miteinander verbundene, großflächige Gegenkontakte 27 und 28 auf, die mit zwei an der Innenseite 29 des Oberteils 29 angeordneten stationären Kontakten 31, 32 zusammenwirken, die innere Köpfe von Kontaktnieten 33, 34 sind, die das Oberteil 15 durchgreifen und mit ihren äußeren Köpfen als Außenanschlüsse 35, 36 dienen.

In der in Fig. 2 gezeigten Schaltstellung drücken Feder-Schnappscheibe 21 und Bimetall-Schnappscheibe 22 den Kontaktteller 24 gegen die stationären Kontakte 31 und 32, die über die Gegenkontakte 27, 28 somit miteinander verbunden sind; der Schalter 10 ist also geschlossen.

Erhöht sich die Temperatur der Bimetall-Schnappscheibe 22 über ihre Ansprechtemperatur hinaus, so schnappt sie von der gezeigten konvexen in eine konkave Form um und stützt sich dabei mit ihrem Rand im Bereich des Ringes 17 ab und zieht den Kontaktteller 24 gegen die Kraft der Feder-Schnappscheibe 21 von den stationären Kontakten 31, 32 weg; der Schalter 10 ist jetzt geöffnet.

Der insoweit beschriebene Schalter ist aus der DE 26 44 411 C2 und der DE 198 27 113 C2 bekannt. Wenn sich die Temperatur jetzt wieder erniedrigt, würde der aus der DE 26 44 411 C2 bekannte Schalter wieder in den in Fig. 2 gezeigten geschlossenen Zustand zurückschnappen.

Um dieses ungewollte Wiedereinschalten zu verhindern, ist an der Innenseite des Oberteils 15 ein schematisch angedeuteter Selbsthaltewiderstand 37 vorgesehen, der elektrisch in Reihe zwischen die beiden stationären Kontakte 31, 32 geschaltet ist und bei geöffnetem Schalter 10 einen Reststrom führt, durch den er sich so weit aufheizt, dass die Bimetall-Schnappscheibe 22 auf einer Temperatur oberhalb ihrer Rücksprungtemperatur gehalten wird.

Während der Kontaktteller 24 in dem gezeigten Ausführungsbeispiel von einem temperaturabhängigen Schaltwerk 11 mit einer kreisrunden Feder-Schnappscheibe 21 und einer kreisrunden Bimetall-Schnappscheibe 22 bewegt wird, ist es auch möglich, auf die Feder-Schnappscheibe zu verzichten und den Kontaktteller 24 nur durch eine Bimetall-Schnappscheibe 22 zu halten und zu bewegen. Ferner kann statt eines kreisrunden Kontakttellers 24 auch eine längliche Kontaktbrücke eingesetzt werden.

Während in dem gezeigten Ausführungsbeispiel der Kontaktteller 24 zentrisch von der Bimetall-Schnappscheibe 22 und Feder-Schnappscheibe 21 gehalten werden, ist es auch möglich, eine einseitig eingespannte, längliche Bimetallfeder zu verwenden, die an ihrem freien Ende eine Kontaktbrücke trägt, wie es beispielsweise aus der DE 10 2004 036 117 A1 bekannt ist.

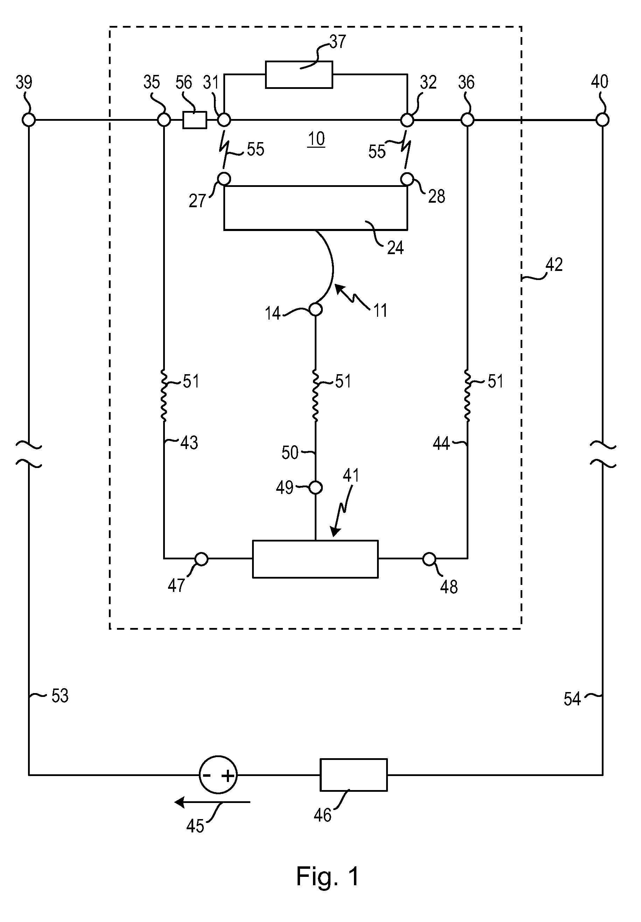

In Fig. 1 ist zwischen zwei Verbindungsanschlüssen 39, 40 die Zusammenschaltung des temperaturabhängigen Schalters 10 aus Fig. 2 mit einem elektronischen Halbleiterschalter 41 zu einer gestrichelt umrandeten Temperaturschutzschaltung 42 gezeigt, der über die Verbindungsanschlüsse 39, 40 mit einer Reihenschaltung aus einer Versorgungsgleichspannung 45 und einem zu schützenden elektrischen Gerät 46 verbunden ist.

Der Schalter 10 ist in Fig. 1 lediglich schematisch angedeutet; die schematisch angedeuteten konstruktiven Merkmale sind mit den Bezugszeichen wie in Fig. 2 versehen. Zwei Anschlussleitungen 43, 44 sind mit den beiden Außenanschlüssen 35, 36 des Schalters 10 verbunden, die wiederum mit den stationären Kontakten 31, 32 verbunden sind, die in der in Fig. 2 gezeigten Schaltstellung über den Kontaktteller 24 kurzgeschlossen sind, der von dem Schaltwerk 11 getragen wird. Die Außenanschlüsse 35, 36 sind mit den Verbindungsanschlüssen 39 bzw. 40 der Temperaturschutzschaltung 42 verbunden.

Der Kontaktteller 24 ist über das Schaltwerk 11, also hier die Feder-Schnappscheibe 21 elektrisch mit dem Unterteil 14 verbunden, das in Fig. 1 durch einen Kreis als Anschluss gekennzeichnet ist. Der Halbleiterschalter 41 weist zwei Stromanschlüsse 47, 48 auf, die jeweils mit einer der Anschlussleitungen 43, 44 verbunden sind. Ferner weist der Halbleiterschalter 41 einen Steuereingang 49 auf, der mit dem Unterteil 14 über eine Steuerleitung 50 verbunden ist.

Durch gewellte Abschnitte 51 in den Anschlussleitungen 43, 44 und der Steuerleitung 50 ist angedeutet, dass der Halbleiterschalter 41 an jeder geeigneten Stelle an die Anschlussleitungen 43, 44 angeschlossen werden kann. Die gewellten Anschlüsse 51 können als Stecker ausgebildet sein, so dass der Halbleiterschalter 41 nachträglich an das Gerät 46 angeschlossen und jederzeit ausgetauscht werden kann.

Der Halbleiterschalter 41 kann somit bei bestehender oder festliegender Verkabelung des Schalters 10 mit der Versorgungsgleichspannung 45 und dem Gerät 46 beliebig an die Anschlussleitungen 43, 44 oder externe Leitungen 53, 54 angeschlossen werden, die dazu nicht neu verlegt, sondern nur an passender Stelle für den Anschluss an die Stromanschlüsse 47, 48 abisoliert werden müssen. Lediglich die Steuerleitung 50 muss noch zu dem Schalter 10 verlegt und dort außen mit dem Unterteil 14 verbunden werden, wodurch die elektrische Verbindung zu dem Schaltwerk 11 und über dieses zu dem Kontaktteller 24 hergestellt wird.

Auf diese nicht zur Erfindung gehörende Weise kann ein bestehender Schalter 10 mit dem Halbleiterschalter 41 verbunden werden, der auf die eingangs geschilderte Weise dafür sorgt, dass die sich beim Öffnen des Schalters 10 zwischen dem Gegenkontakten 27, 28 und den stationären Kontakten 31, 32 bildenden Lichtbögen sehr schnell gelöscht werden, die in Fig. 1 schematisch mit 55 bezeichnet sind. In Fig. 1 ist der Schalter 10 in einem Schaltzustand gezeigt, in dem sich der Kontaktteller 24 gerade von den stationären Kontakten 31, 32 wegbewegt.

Öffnet der temperaurabhängige Schalter 10, wie in Fig. 1 gezeigt, so beginnen sich beim Abheben des Kontakttellers 24 von den stationären Kontakten 31, 32 die Lichtbögen 55 auszubilden, die schnell eine Lichtbogenspannung aufbauen. Dadurch wird ein hinreichend hoher und lang andauernder Steuerstrom für den Halbleiterschalter 41 erzeugt, der über den Kontaktteller 24, die Feder-Schnappscheibe 21 und das Unterteil 14 in die Steuerleitung 50 und von dort in den Steuereingang 49 fließt. Nach dem Entladen der Eingangskapazität des Halbleiterschalters, was nur wenige Mikrosekunden dauert, wird der Steuerstrom auf den Reststrom reduziert, der im Mikroamperebereich liegt, und der Halbleiterschalter 41 schließt.

Sobald der Halbleiterschalter 41 schließt, übernimmt er den Laststrom und der temperaturabhängige Schalter 10 wird stromlos, so dass die Lichtbögen 55 erlöschen, woraufhin der Halbleiterschalter 41 wieder öffnet.

Der Selbsthaltewiderstand 37 übernimmt nun einen Reststrom, der den Schalter 10 auch nach dem Abkühlen des Gerätes 46 offen hält.

In Fig. 1 ist noch ein Heizwiderstand 56 gezeigt, der in Reihe zwischen den stationären Kontakt 31 und den Außenanschluss 35, also einen der Verbindungsanschlüsse der Temperaturschutzschaltung 42 geschaltet ist.

Weder der Selbsthaltewiderstand 37 noch der Heizwiderstand 56 beeinträchtigen das erfindungsgemäß genutzte Zusammenwirken von Schalter 10 und Halbleiterschalter 41.

Während bei dem Schalter 10 aus Fig. 2 das Unterteil 14 elektrisch leitend ausgebildet ist, kann es auch aus Isoliermaterial gefertigt sein. Damit das Schaltwerk 11 dennoch mit dem Steuereingang 49 verbunden werden kann, ist eine zusätzliche Elektrode erforderlich, die die Verbindung zu dem Schaltwerk 11 herstellt. Dies kann bei der Konstruktion der Fig. 1 eine am Absatz 18 seitlich herausgeführte Lasche sein.

Wenn der Kontaktteller 24 an einem freien Ende einer Bimetallfeder angeordnet ist, kann dies eine Elektrode sein, die mit dem anderen, dem eingespannten Ende der Bimetallfeder verbunden ist.

Die beiden Außenanschlüsse 35 und 36 können auch gleichzeitig als Verbindungsanschlüsse 39 bzw. 40 dienen. Die externen Leitungen 53, 54 können auch durch die Verbindungsleitungen 43 bzw. 44 gebildet werden, die dazu zu dem Gerät 46 und der Versorgungsgleichspannung 45 weitergeführt werden.

Statt eines Schalters 10 mit zwei gleichzeitig öffnenden Kontaktpaaren 27/31 und 28/32 können auch zwei einpolige temperaturabhängige Schalter verwendet werden, wie sie beispielsweise in der DE 21 21 802 A und anderen Schutzrechten der hiesigen Anmelderin beschrieben sind.

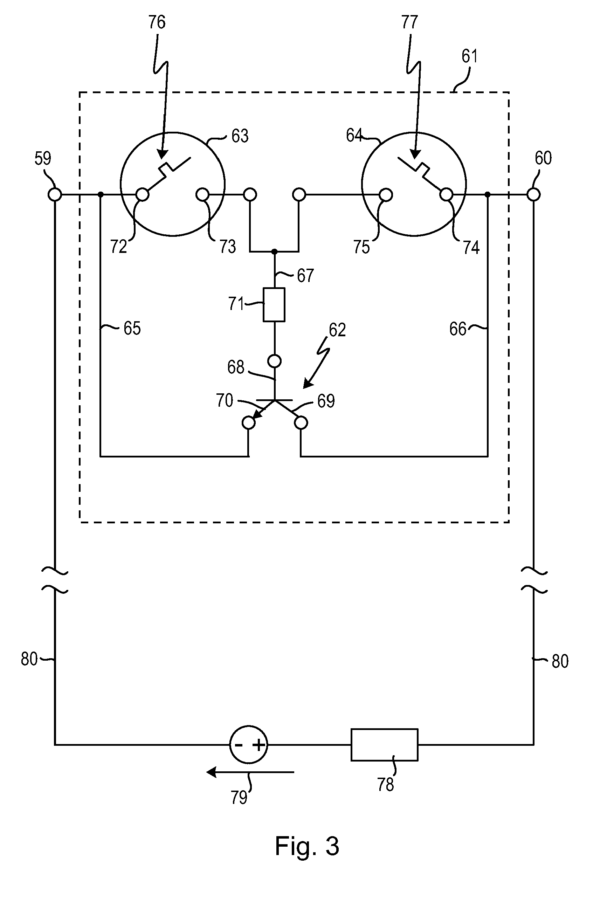

In Fig. 3 ist zwischen zwei Verbindungsanschlüssen 59, 60 eine Temperaturschutzschaltung 61 gezeigt, in der ein als n-Kanal bipolarer Transistor 62 ausgebildeter Halbleiterschalter mit zwei einpoligen temperaturabhängigen Schaltern 63, 64 über zwei Anschlussleitungen 65, 66 und eine Steuerleitung 67 verbunden ist. Die Schalter 63 und 64 sind als sogenannter Zwilling verschaltet.

Der Transistor 62 weist als Steuereingang eine Basis 68 sowie einen Kollektor 69 und einen Emitter 70 auf, die als Stromanschlüsse dienen. Die Basis 68 ist über einen Längswiderstand 71 mit der Steuerleitung 67 verbunden.

Jeder Schalter 63, 64 weist zwei Außenanschlüsse 72, 73 bzw. 73, 74 auf. Die Außenanschlüsse 73 und 75 sind miteinander und über die Steuerleitung 67 mit dem Längswiderstand 71 und über diesen mit der Basis 68 verbunden. Die Außenanschlüsse 72 und 74 sind mit den Verbindungsanschlüssen 59 bzw. 60 verbunden und an die Anschlussleitungen 65 bzw. 66 angeschlossen.

Jeder Schalter 63, 64 weist ferner ein Schaltwerk 76 bzw. 77 auf, das über die Außenanschlüsse 73 bzw. 75 mit dem Transistor 62 verbunden ist. Wenn die Schaltwerke 76, 77 infolge Überhitzung eines an die Verbindungsanschlüsse 59, 60 angeschlossenen Gerätes 78 öffnen, ergibt sich eine vergleichbare Funktion wie bei der Temperaturschutzschaltung 41 aus Fig. 2. Externe Leitungen 80 dienen der Reihenschaltung von Temperaturschutzschaltung 61, Gerät 78 und Versorgungsgleichspannung 79.

Aufgrund der Schutzfunktion des Transistors 62 können für die Temperaturschutzschaltung 61 aus Fig. 3 sehr einfach aufgebaute temperaturabhängige Schalter 63, 64 verwendet werden, die eigentlich nur für geringe Abschaltleistungen ausgelegt sind. Da der Transistor 62 auf die beschriebene Weise jedoch dafür sorgt, dass entstehende Lichtbögen sehr schnell wieder gelöscht werden, lassen sich diese Schalter für höhere Abschaltleistungen einsetzen und weisen zudem noch eine längere Lebensdauer auf.

Die beiden Außenanschlüsse 72 und 74 können auch gleichzeitig als Verbindungsanschlüsse 59 bzw. 60 dienen. Die externen Leitungen 80 können auch durch die Verbindungsleitungen 65 bzw. 66 gebildet werden, die dazu zu dem Gerät 78 und der Versorgungsgleichspannung 79 weitergeführt werden.

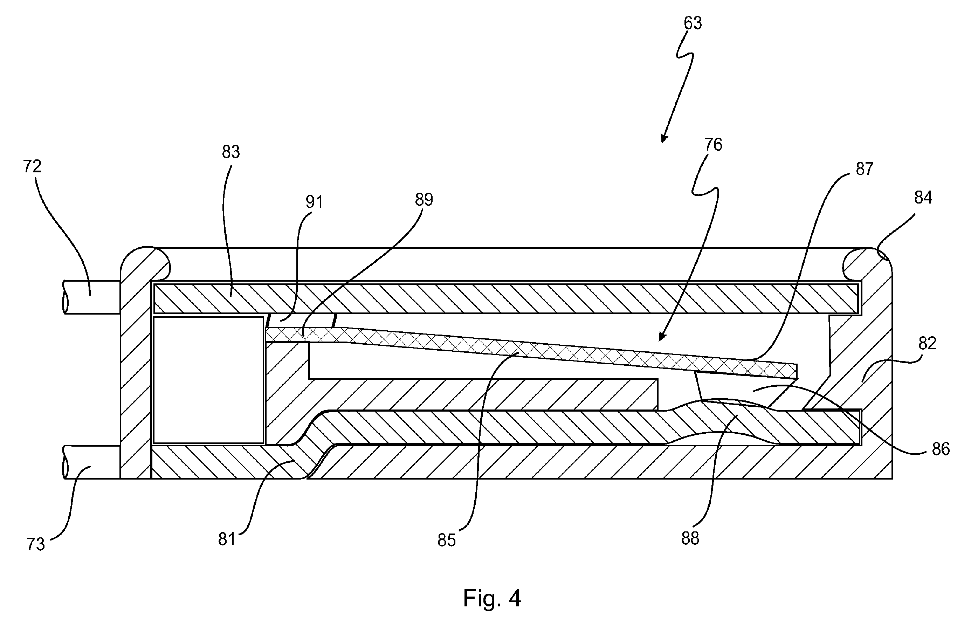

In Fig. 4 ist beispielhaft ein einfacher, einpoliger temperaturabhängiger Schalter 63 gezeigt, der eine Bodenelektrode 81 aufweist, die mit einem Tragteil 82 aus Kunststoff umspritzt ist, auf dem eine Deckelelektrode 83 sitzt, die über einen heiß verpressten Rand 84 des Tragteiles 82 gehalten ist.

Die Deckelelektrode 83 sowie die Bodenelektrode 81 sind mit den Außenanschlüssen 72 bzw. 73 versehen.

Im Inneren des so gebildeten Gehäuses des Schalters 63 ist das temperaturabhängige Schaltwerk 76 angeordnet, das im vorliegenden Fall eine Federzunge 85 aus Bimetallmaterial umfasst.

Die Federzunge 85 trägt ein bewegliches Kontaktteil 86 an ihrem freien Ende 87. Das bewegliche Kontaktteil 86 arbeitet mit einer Vorwölbung 88 der Bodenelektrode 81 zusammen. Diese Vorwölbung 88 wirkt als stationäres Kontaktteil, so dass Kontaktteil 86 und Vorwölbung einen Schaltkontakt bilden.

An ihrem hinteren Ende 89 ist die Federzunge 85 über ein Zwischenteil 91 mit der Deckelelektrode 83 verbunden.

Erhöht sich die Temperatur in dem Inneren des Schalters 63 über die Ansprechtemperatur der Federzunge 85 hinaus, so bewegt diese ihr freies Ende 87 in Fig. 4 nach oben, so dass das bewegliche Kontaktteil 86 von der Vorwölbung 88 abgehoben wird. Der dabei entstehende Lichtbogen wird durch den Transistor 62 in der beschriebenen Weise gelöscht.

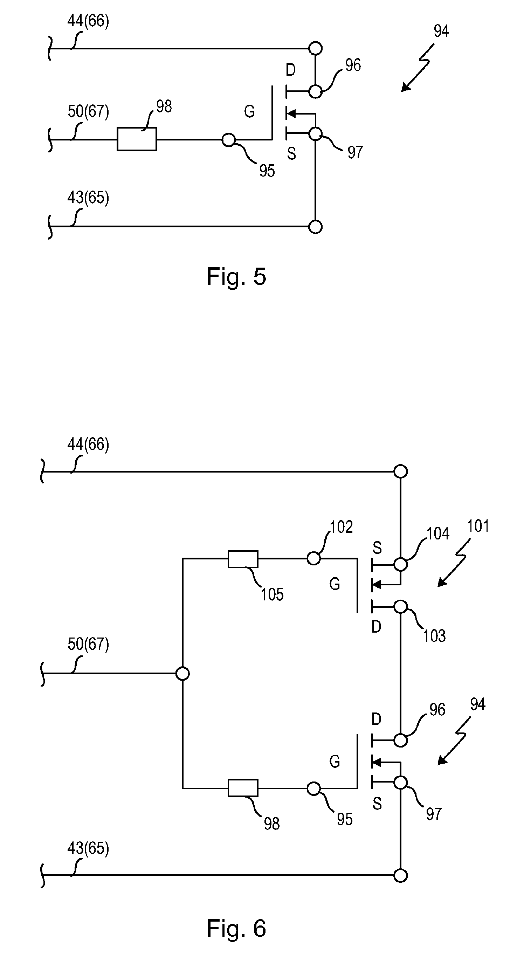

In der nicht zur Erfindung gehörenden Fig. 5 ist als Halbleiterschalter 41 ein selbstsperrender n-Kanal MOSFET 94 gezeigt, der als Steuereingang eine Gate-Elektrode 95 und als Stromanschlüsse eine Drain-Elektrode 96 und eine Source-Elektrode 97 aufweist. Der MOSFET 94 kann als Halbleiterschalter 41 in der Temperaturschutzschaltung 42 aus Fig. 1 oder anstelle des Transistors 62 in der Temperaturschutzschaltung 61 aus Fig. 3 eingesetzt werden.

Dazu wird seine Gate-Elektrode 95 über einen Längswiderstand 98 mit der Steuerleitung 50 bzw. 67 verbunden, während Drain-Elektrode 96 und Source-Elektrode 97 mit den Anschlussleitungen 44 und 43 bzw. 66 und 65 verbunden werden.

Beim Öffnen der temperaturabhängigen Schalter 10, 63, 64 fällt über der Gate-Source Strecke die halbe Lichtbogenspannung ab, was den MOSFET 94 durchschaltet. Der MOSFET 94 übernimmt den Laststrom und die Lichtbögen erlöschen, woraufhin der MOSFET 94 wieder öffnet.

Bei dieser Schaltung muss auf die richtige Polung des MOSFET 94 zu der Versorgungsgleichspannung 45, 79 geachtet werden. Wenn das Gerät 46, 78 eine induktive oder kapazitive Last aufweist, kann der MOSFET zudem die Freilaufdiode ersetzen.

Durch die Widerstandswerte der Längswiderstände 71, 98 wird die Durchschaltgeschwindigkeit der Transistoren 62, 94 begrenzt.

In Fig. 6 ist in einer Darstellung wie in Fig. 5 eine Schaltung gezeigt, bei der ein zweiter MOSFET 101 mit Gate-Elektrode 102, Drain-Elektrode 103 und Source-Elektrode 104 eingesetzt wird, damit die Temperaturschutzschaltung erfindungsgemäß in beiden Stromrichtungen mit Lichtbogenlöschung ausgestattet ist.

Die MOSFET 94, 101 sind so anti in Reihe zwischen die beiden Anschlussleitungen 44(66) und 43 (67) geschaltet, dass ihre Drain-Elektroden 96 und 103 miteinander verbunden sind und ihre Source-Elektroden 104 bzw. 97 mit den Anschlussleitungen 44(66) und 43 (67) verbunden sind. Die Gate-Elektroden 95 und 102 sind über ihre Längswiderstände 98 und 105 miteinander und mit der Steuerleitung 50(67) verbunden.

Sowohl bei der in Fig. 1 und Fig. 3 gezeigten Polarität der Versorgungsgleichspannung 45 bzw. 79 als auch bei entgegengesetzter Polarität führen beim Öffnen der temperaturabhängigen Schalter 10, 63, 64 entstehende Lichtbögen dazu, dass zunächst einer der beiden MOSFET 94 und 101 durchschaltet. Dies führt dann dazu, dass durch den geschalteten MOSFET 94, 101 und auch durch den anderen MOSFET 101 bzw. 94 ein Strom fließt, und zwar durch dessen Substratelektrode, die Strom entgegengesetzt zu der Drain-Source-Stromrichtung durchlässt. Dies führt wieder zu der Löschung der Lichtbögen und in der Folge wieder zum Öffnen des zuvor geschalteten MOSFET 94 bzw. 101.

Bei Verwendung der Schaltung gemäß Fig. 6 ist die Temperaturschutzschaltung 42, 61 also gegen Verpolung geschützt, während bei Verwendung der Schaltung gemäß Fig. 5 auf die richtige Polung der Temperaturschutzschaltung 42, 61 in dem Schaltkreis mit dem Gerät 46, 78 und der Versorgungsgleichspannung 45, 79 geachtet werden muss.

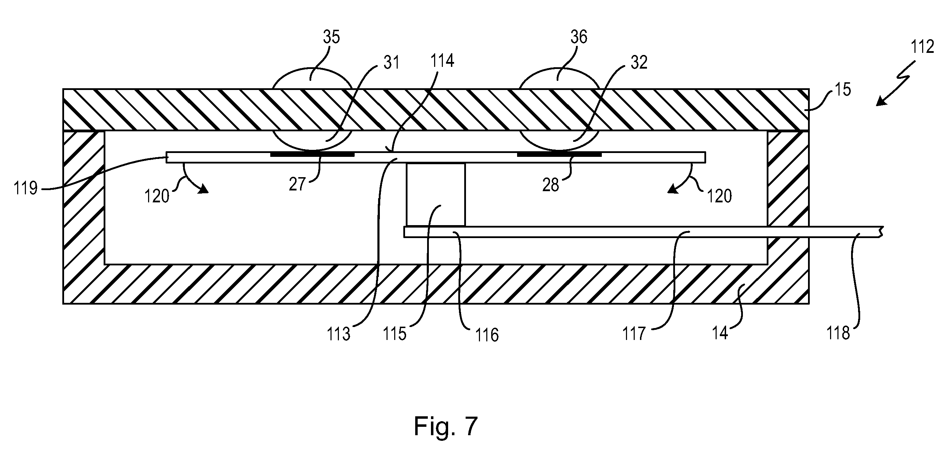

In Fig. 7 ist in einer Darstellung wie in Fig. 2 ein weiterer temperaturabhängiger Schalter 112 gezeigt, der in der Temperaturschutzschaltung 42 aus Fig. 1 einsetzbar ist. Der Schalter 112 umfasst wie der Schalter 10 ein Oberteil 15, an dem innen die beiden stationären Kontakte 31, 32 angeordnet sind, die mit den beiden Außenanschlüssen 35, 36 verbunden sind.

Das temperaturabhängige Schaltwerk 11 umfasst eine Bimetall-Schnappscheibe 113, auf deren Oberseite 114 die beiden Gegenkontakte 27, 28 ausgebildet sind, die im einfachsten Fall durch die Oberseite 114 selbst gebildet sind, weil die Bimetall-Schnappscheibe 113 selbst elektrisch leitfähig ist. Die Bimetall-Schnappscheibe 113 übernimmt also hier als Federteil zusätzlich die Aufgabe des Kontakttellers 24, ist also gleichzeitig das Stromübertragungsglied.

Die Bimetall-Schnappscheibe 113 ist zentrisch über einen elektrisch leitenden Bolzen 115 an einem inneren Ende 116 einer elektrisch leitenden Tragelektrode 117 befestigt, deren äußeres Ende 118 mit der Steuerleitung aus Fig. 1 verbunden wird. Das Unterteil 14 ist bei diesem Ausführungsbeispiel genauso aus Isoliermaterial gefertigt wie das Oberteil 15.

Wenn das Unterteil 14 dagegen elektrisch leitend ist, so kann der Bolzen 116 direkt unten auf dem inneren Boden des Unterteils 14 befestigt werden so dass das Unterteil 14 wieder für die permanente elektrische Verbindung zu dem Steuereingang 49 verwendet werden kann.

Erhitzt sich die Bimetall-Schnappscheibe 113 über ihre Ansprechtemperatur hinaus, so bewegt sich ihr Rand 119 in Fig. 7 nach unten, was durch Pfeile 120 angedeutet ist. Bei dieser Bewegung werden die Gegenkontakte 27, 28 von den stationären Kontakten 31, 32 weg bewegt, so dass sich Lichtbögen ausbilden, die jedoch auf die oben beschriebene Weise schnell durch den Halbleiterschalter 41 gelöscht werden.

## Patentansprüche

1. Temperaturschutzschaltung mit zwei elektrischen Verbindungsanschlüssen (39, 40; 59, 60) für ein gegen Überhitzung zu schützendes elektrisches Gerät (46; 78) und zumindest einem temperaturabhängigen Schalter (10; 63, 64; 112), wobei
die Temperaturschutzschaltung zumindest einen elektronischen Halbleiterschalter (41; 62; 94; 101) umfasst, und
der temperaturabhängige Schalter (10; 112) ein temperaturabhängiges Schaltwerk (11), zwei stationäre Kontakte (31, 32), die mit den Verbindungsanschlüssen (39, 40) verbunden sind, sowie zwei elektrisch miteinander verbundene Gegenkontakte (27, 28) umfasst, die temperaturabhängig mit den beiden stationären Kontakten (31, 32) in Anlage sind und diese dann elektrisch miteinander verbinden,
**dadurch gekennzeichnet, dass** zwei Halbleiterschalter (94; 101) für Gleichspannung vorgesehen sind, die jeweils einen Steuereingang (95, 102) umfassen, wobei die Steuereingänge (95; 102) zumindest bei geschlossenem temperaturabhängigem Schalter (10) über das Schaltwerk (11) elektrisch mit den Gegenkontakten (27, 28) verbunden sind, wobei jeder Halbleiterschalter (95; 101) einen ersten (96; 103) und einen zweiten (97; 104) Stromanschluss aufweist, der erste Stromanschluss (96) des einen Halbleiterschalters (94) mit dem ersten Stromanschluss (103) des anderen Halbleiterschalters (101) verbunden ist, und der zweite Stromanschluss (97) der einen sowie der zweite Stromanschluss (104) des anderen Halbleiterschalters (101) mit einem der Verbindungsanschlüsse (39, 40; 59, 60) verbunden ist.

2. Temperaturschutzschaltung nach Anspruch 1, **dadurch gekennzeichnet, dass** jeder Halbleiterschalter (41) einen Feldeffekttransistor (FET) oder einen MetallOxid-Halbleiter-Feldeffekttransistor (MOS-FET) umfasst.

3. Temperaturschutzschaltung nach Anspruch 1 oder 2, **dadurch gekennzeichnet, dass** das Schaltwerk (11) ein Stromübertragungsglied (24; 113) aufweist, an dem die beiden elektrisch miteinander verbundenen Gegenkontakte (27, 28) angeordnet sind.

4. Temperaturschutzschaltung nach Anspruch 3, **dadurch gekennzeichnet, dass** das temperaturabhängige Schaltwerk (11) ein Federteil (21, 22) umfasst, das das Stromübertragungsglied (24) trägt und mit diesem elektrisch leitend verbunden ist sowie zumindest bei geschlossenem temperaturabhängigem Schalter (10) elektrisch mit dem Steuereingang (49) verbunden ist.

5. Temperaturschutzschaltung nach Anspruch 4, **dadurch gekennzeichnet, dass** der Schalter (10) ein das Schaltwerk (11) aufnehmendes Gehäuse (12) aufweist, das ein Unterteil (14) sowie ein Oberteil (15) aufweist, an dessen Innenseite (29) die stationären Kontakte (31, 32) angeordnet sind.

6. Temperaturschutzschaltung nach Anspruch 4, **dadurch gekennzeichnet, dass** das Federteil (21, 22) eine Bimetall-Schnappscheibe (22) ist, die sich zumindest bei geschlossenem temperaturabhängigem Schalter (10) an dem Unterteil (14) abstützt.

7. Temperaturschutzschaltung nach Anspruch 4, **dadurch gekennzeichnet, dass** das Federteil (21, 22) eine Feder-Schnappscheibe (21) ist, die sich zumindest bei geschlossenem temperaturabhängigem Schalter (10) an dem Unterteil (14) abstützt, wobei eine Bimetall-Schnappscheibe (22) vorgesehen ist, die das Stromübertragungsglied (24) oberhalb ihrer Schalttemperatur von den stationären Kontakten (31, 32) abhebt.

8. Temperaturschutzschaltung nach Anspruch 6 oder 7, **dadurch gekennzeichnet, dass** das Unterteil (14) elektrisch leitfähig ist.

9. Temperaturschutzschaltung nach Anspruch 8, **dadurch gekennzeichnet, dass** das Federteil (21, 22) permanent elektrisch mit dem Unterteil (14) verbunden ist.

10. Temperaturschutzschaltung nach einem der Ansprüche 1 bis 9, **dadurch gekennzeichnet, dass** zwischen den stationären Kontakten (31, 32) ein Selbsthaltewiderstand (37) angeschlossen ist.

11. Temperaturschutzschaltung nach einem der Ansprüche 1 bis 10, **dadurch gekennzeichnet, dass** zwischen einen (31) der stationären Kontakte (31, 32) und den zugeordneten Verbindungsanschluss (39) ein Heizwiderstand (56) geschaltet ist.

12. Temperaturschutzschaltung nach einem der Ansprüche 3 bis 11, **dadurch gekennzeichnet, dass** das Stromübertragungsglied (24) ein elektrisch leitfähiger Kontaktteller (24) ist, auf dem die beiden Gegenkontakte (27, 28) angeordnet sind, die über den Kontaktteller (24) elektrisch leitend miteinander verbunden sind, wobei der Kontaktteller (24) elektrisch leitend mit dem Schaltwerk (11) verbunden ist.

13. Temperaturschutzschaltung nach Anspruch 3, **dadurch gekennzeichnet, dass** das Stromübertragungsglied (24, 113) ein elektrisch leitfähiges Federteil (113) ist, auf dem die beiden Gegenkontakte (27, 28) vorgesehen sind, die über das Federteil (113) elektrisch leitend miteinander verbunden sind.

14. Temperaturschutzschaltung nach Anspruch 13, **dadurch gekennzeichnet, dass** das Federteil (113) eine Bimetall-Schnappscheibe (113) ist.

15. Temperaturschutzschaltung nach Anspruch 14, **dadurch gekennzeichnet, dass** das Federteil (113) permanent elektrisch mit dem Steuereingang (49) verbunden ist.

16. Temperaturschutzschaltung nach Anspruch 1 oder 2, **dadurch gekennzeichnet, dass** zwei temperaturabhängige Schalter (63, 64) vorgesehen sind, die jeweils ein temperaturabhängiges Schaltwerk (76, 77) aufweisen, das temperaturabhängig eine elektrische Verbindung zwischen zwei Außenanschlüssen (72, 73; 74, 75) herstellt oder öffnet, wobei je ein Außenanschluss (72, 74) eines Schalters (63 64) mit einem der Verbindungsanschlüsse (59, 60) verbunden ist oder als Verbindungsanschluss dient und die jeweils anderen Außenanschlüsse (73, 75) der Schalter (63, 64) miteinander verbunden sind.

17. Elektrisches Gerät (46; 78) mit einer Temperaturschutzschaltung nach einem der Ansprüche 1 bis 16.

## Claims

1. Thermal protection circuit comprising two electrical connection terminals (39, 40; 59, 60) for an electrical device (46; 78) to be protected from overheating and at least one temperature-dependent switch (10; 63, 64; 112), wherein
the thermal protection circuit comprises at least one electronic semiconductor switch (41; 62; 94; 101), and
said temperature-dependent switch (10; 112) comprises a temperature-dependent switching mechanism (11), two stationary contacts (31, 32) which are connected to the connection terminals (39, 40), and two counter contacts (27, 28), which counter contacts are electrically connected to one another, are in temperature-dependent bearing contact with the two stationary contacts (31, 32) and in this state connect said stationary contacts electrically to one another,
**characterized in that** two semiconductor switches (94; 101) for DC voltage are provided, each comprising a control input (95; 102), said control inputs (95; 102) being electrically connected via the switching mechanism (11) to the counter contacts (27, 28), at least when the temperature-dependent switch (10) is closed, wherein each semiconductor switch (95; 101) comprises a first (96; 103) and a second (97; 104) current terminal, the first current terminal (96) of one of the semiconductor switches (94) being connected to the first current terminal (103) of the other semiconductor switch (94), and the second current terminal (97) of one of the semiconductor switches and the second current terminal (104) of the other semiconductor switch (101) are connected with one of the connection terminals (39, 40; 59, 60).

2. Thermal protection circuit according to Claim 1, **characterized in that** each semiconductor switch (41) comprises a field-effect transistor (FET) or a metaloxide semiconductor field-effect transistor (MOS-FET).

3. Thermal protection circuit according to Claim 1 or 2, **characterized in that** the switching mechanism (11) comprises a current transfer element (24; 113) at which said two electrically interconnected counter contacts (27, 28) are arranged.

4. Thermal protection circuit according to Claim 3, **characterized in that** the temperature-dependent switching mechanism (11) comprises a spring part (21, 22), which bears the current transfer element (24) and is electrically conductively connected thereto and is electrically connected to the control input (49) at least when the temperature-dependent switch (10) is closed.

5. Thermal protection circuit according to Claim 4, **characterized in that** the switch (10) has a housing (12), which accommodates the switching mechanism (11) and has a lower part (14) and an upper part (15), with the stationary contacts (31, 32) being arranged on the inner side (29) of said upper part.

6. Thermal protection circuit according to Claim 4, **characterized in that** the spring part (21, 22) is a bimetallic snap-action disc (22), which is supported on the lower part (14) at least when the temperature-dependent switch (10) is closed.

7. Thermal protection circuit according to Claim 4, **characterized in that** the spring part (21, 22) is a spring snap-action disc (21), which is supported on the lower part (14) at least when the temperature-dependent switch (10) is closed, wherein a bimetallic snap-action disc (22) is provided which lifts off the current transfer element (24) from the stationary contacts (31, 32) above the switching temperature of said bimetallic snap-action disc.

8. Thermal protection circuit according to Claim 6 or 7, **characterized in that** the lower part (14) is electrically conductive.

9. Thermal protection circuit according to Claim 8, **characterized in that** the spring part (21, 22) is permanently electrically connected to the lower part (14).

10. Thermal protection circuit according to anyone of Claims 1 to 9, **characterized in that** a self-holding resistor (37) is connected between the stationary contacts (31, 32).

11. Thermal protection circuit according to anyone of Claims 1 to 10, **characterized in that** a heating resistor (56) is connected between one (31) of the stationary contacts (31, 32) and the associated connection terminal (39).

12. Thermal protection circuit according to anyone of Claims 3 to 11, **characterized in that** the current transfer element (24) is an electrically conductive contact plate (24), on which the two counter contacts (27, 28) are arranged, which counter contacts are electrically conductively connected to one another via the contact plate (24), wherein the contact plate (24) is electrically conductively connected to the switching mechanism (11).

13. Thermal protection circuit according to Claim 3, **characterized in that** the current transfer element (24, 113) is an electrically conductive spring part (113), on which the two counter contacts (27, 28) are arranged, which counter contacts are electrically conductively connected to one another via the spring part (113).

14. Thermal protection circuit according to Claim 13, **characterized in that** said spring part (113) is a bimetallic snap-action disc (113).

15. Thermal protection circuit according to Claim 14, **characterized in that** said spring part (113) is permanently connected to said control input (49).

16. Thermal protection circuit according to Claim 1 or 2, **characterized in that** two temperature-dependent switches (63, 64) are provided, which each have a temperature-dependent switching mechanism (76, 77), which produces or opens, in temperature-dependent fashion, an electrical connection between two external terminals (72, 73; 74, 75), wherein in each one external terminal (72, 74) of a switch (63, 64) is connected to one of the connection terminals (59, 60) or itself acts as connection terminal, and the respective other external terminals (73, 75) of the switches (63, 64) are connected to one another.

17. Electrical device (46; 78) comprising a thermal protection circuit as claimed in anyone of claims 1 to 16.

## Revendications

1. Circuit de protection thermique avec deux branchements de liaison électriques (39, 40 ; 59, 60) pour un appareil électrique (46 ; 78) à protéger contre une surchauffe et avec au moins un interrupteur (10; 63, 64; 112) dépendant de la température, dans lequel
le circuit de protection thermique comprend au moins un commutateur statique (41 ; 62 ; 94 ; 101) électronique, et
l'interrupteur (10; 112) dépendant de la température comprend un mécanisme de commutation (11) dépendant de la température, deux contacts stationnaires (31, 32), qui sont reliés aux branchements de liaison (39, 40), ainsi que deux contacts homologues (27, 28) reliés électriquement entre eux, qui sont en fonction de la température en contiguïté avec les deux contacts stationnaires (31, 32) et relient ceux-ci ensuite électriquement,
**caractérisé en ce que** sont prévus deux commutateurs statiques (94 ; 101) pour tension continue qui comprennent chacun une entrée de commande (95, 102), dans lequel les entrées de commande (95; 102) sont reliées électriquement, au moins lorsque l'interrupteur (10) dépendant de la température est fermé, par le biais du mécanisme de commutation (11) aux contacts homologues (27, 28), dans lequel chaque commutateur statique (95 ; 101) présente un premier (96 ; 103) et un second (97 ; 104) branchement de courant, le premier branchement de courant (96) d'un commutateur statique (94) est relié au premier branchement de courant (103) de l'autre commutateur statique (101) et le second branchement de courant (97) du commutateur statique ainsi que le second branchement de courant (104) de l'autre commutateur statique (101) sont reliés à un des branchements de liaison (39, 40 ; 59, 60).

2. Circuit de protection thermique selon la revendication 1, **caractérisé en ce que** chaque commutateur statique (41) comprend un transistor à effet de champ (FET) ou un transistor métal-oxyde semiconducteur à effet de champ (MOS-FET).

3. Circuit de protection thermique selon la revendication 1 ou 2, **caractérisé en ce que** le mécanisme de commutation (11) comprend un élément de transmission de courant (24 ; 113) auquel sont associés les deux contacts homologues (27, 28) reliés électriquement entre eux.

4. Circuit de protection thermique selon la revendication 3, **caractérisé en ce que** le mécanisme de commutation (11) dépendant de la température comprend une partie élastique (21, 22) qui porte l'élément de transmission de courant (24) et est reliée d'une manière électroconductrice à celui-ci ainsi qu'elle est reliée électriquement à l'entrée de commande (49) au moins lorsque l'interrupteur (10) dépendant de la température est fermé.

5. Circuit de protection thermique selon la revendication 4, **caractérisé en ce que** l'interrupteur (10) comprend un boîtier (12), logeant le mécanisme de commutation (11), qui comprend une partie inférieure (14) ainsi qu'une partie supérieure (15) sur la face interne (29) de laquelle sont disposés les contacts stationnaires (31, 32).

6. Circuit de protection thermique selon la revendication 4, **caractérisé en ce que** la partie élastique (21, 22) est un disque sensible bimétallique (22) qui s'appuie contre la partie inférieure (14) lorsque l'interrupteur (10) dépendant de la température est fermé.

7. Circuit de protection thermique selon la revendication 4, **caractérisé en ce que** la partie élastique (21, 22) est un disque sensible élastique (21) qui s'appuie contre la partie inférieure (14) lorsque l'interrupteur (10) dépendant de la température est fermé, dans lequel il est prévu un disque sensible bimétallique (22) qui, au-delà de sa température de commutation, soulève des contacts stationnaires (31, 32) l'élément de transmission de courant (24).

8. Circuit de protection thermique selon la revendication 6 ou 7, **caractérisé en ce que** la partie inférieure (14) est électroconductrice.

9. Circuit de protection thermique selon la revendication 8, **caractérisé en ce que** la partie élastique (21, 22) est reliée électriquement à la partie inférieure (14).

10. Circuit de protection thermique selon l'une quelconque des revendications 1 à 9, **caractérisé en ce qu'**une résistance à verrouillage (37) est branchée entre les contacts stationnaires (31, 32).

11. Circuit de protection thermique selon l'une quelconque des revendications 1 à 10, **caractérisé en ce que**, entre un (31) des contacts stationnaires (31, 32) et le branchement de liaison associé (39) est montée une résistance de chauffage (56).

12. Circuit de protection thermique selon l'une quelconque des revendications 3 à 11, **caractérisé en ce que** l'élément de transmission de courant (24) est un plateau de contact (24) électroconducteur sur lequel sont disposés les deux contacts homologues (27, 28) qui sont reliés entre eux d'une manière électroconductrice par le biais du plateau de contact (24), dans lequel le plateau de contact (24) est relié de manière électroconductrice au mécanisme de commutation (11).

13. Circuit de protection thermique selon la revendication 3, **caractérisé en ce que** l'élément de transmission de courant (24, 113) est une partie élastique (113) électroconductrice sur laquelle sont prévus les deux contacts homologues (27, 28) qui sont reliés entre eux d'une manière électroconductrice par le biais de la partie élastique (113).

14. Circuit de protection thermique selon la revendication 13, **caractérisé en ce que** la partie élastique (113) est un disque sensible bimétallique (113).

15. Circuit de protection thermique selon la revendication 14, **caractérisé en ce que** la partie élastique (113) est reliée électriquement en permanence à l'entrée de commande (49).

16. Circuit de protection thermique selon la revendication 1 ou 2, **caractérisé en ce que** sont prévus deux interrupteurs (63, 64) dépendants de la température qui comportent chacun un mécanisme de commutation dépendant de la température (76, 77) qui, en fonction de la température, établit ou ouvre une liaison électrique entre deux branchements externes (72, 73 ; 74, 75), dans lequel un (72, 74) des branchements externes d'un interrupteur (63 64) est relié à un des branchements de liaison (59, 60) ou sert de branchement de liaison et les autres branchements externes (73, 75) de l'interrupteur (63, 64) sont reliés entre eux.

17. Appareil électrique (46 ; 78) avec un circuit de protection thermique selon l'une quelconque des revendications 1 à 16.
